# EUROPÄISCHE PATENTANMELDUNG

(11) **EP 1 081 471 A1**
(43) Veröffentlichungstag der Anmeldung: **07.03.2001**
(21) Anmeldenummer: 00116377.3
(22) Anmeldetag: 28.07.2000
(51) Int. Cl.: G01F 23/296

(54) **Vorrichtung zur Messung eines Füllstandes einer Flüssigkeit in einem Behälter**

(30) Priorität: 04.09.1999 DE 19942378
(71) Anmelder: Mannesmann VDO AG, 60388 Frankfurt am Main (DE)
(72) Erfinder: Keller, Dieter, 63743 Aschaffenburg (DE)
(74) Vertreter: Rassler, Andrea, Dipl.-Phys.

(57) **Zusammenfassung**

Bei einer Vorrichtung (2) zur Messung eines Füllstandes in einem Behälter (1) ist ein Ultraschallsensor (8) außerhalb des Behälters (1), einem im Behälter (1) angeordneten Meßrohr (5) gegenüberstehend angeordnet. Der Ultraschall hat damit keinen Kontakt mit einer im Behälter (1) befindlichen Flüssigkeit. Mit der erfindungsgemäßen Vorrichtung (2) läßt sich der Füllstand der Flüssigkeit besonders exakt ermitteln.

## Beschreibung

Die Erfindung betrifft eine Vorrichtung zur Messung eines Füllstandes einer Flüssigkeit in einem Behälter, insbesondere in einem Kraftstoffbehälter eines Kraftfahrzeuges, mit einem in dem Behälter angeordneten, Ausgleichs-öffnungen aufweisenden Meßrohr und mit einem nahe eines Endes des Meßrohrs angeordneten Ultraschallsensor zur Erzeugung von Ultraschallwellen in dem Meßrohr und zum Empfangen der im Bereich des Flüssigkeitsspiegels im Behälter reflektierten Ultraschallwellen.

Solche Vorrichtungen werden in Kraftfahrzeugen versuchsweise eingesetzt und sind aus der Praxis bekannt. Bei der aus der Praxis bekannten Vorrichtung hat der Ultraschallsensor einen dem Innendurchmesser des Meßrohrs entsprechenden Außendurchmesser und ist in einem Ende des Meßrohrs eingesteckt. Das Meßrohr durchdringt den Boden des Behälters und wird über die Ausgleichsbohrungen mit der im Behälter vorhandenen Flüssigkeit befüllt. Zur Verstärkung der von dem Flüssigkeitsspiegel reflektierten Ultraschallwellen ist in dem Meßrohr ein die Ultraschaltwellen reflektierender Schwimmer angeordnet. Das Meßrohr schirmt den Ultraschallsensor von seitlichen, die Meßergebnisse beeinträchtigenden Reflexionen ab.

Nachteilig bei der bekannten Vorrichtung ist, daß der Ultraschallsensor mit der im Behälter befindlichen Flüssigkeit in Kontakt kommt und der Behälter aufwendig abgedichtet werden muß. Daher benötigt insbesondere der zur Messung eines Füllstandes in einem Kraftstoffbehälter vorgesehene Ultraschallsensor eine sehr aufwendige und kostenintensive Kapselung.

Zur Vermeidung der Abdichtung des Bodens des Behälters ist bereits eine Vorrichtung bekannt geworden, bei der das Meßrohr mit dem Ultraschallsensor an einem Verschlußdeckel des Behälters angeordnet ist und in die Flüssigkeit hineintaucht. Hierbei führt jedoch ein Heben oder Senken des Bodens des Behälters zu Fehlmessungen des Füllstandes. Insbesondere aus Kunststoff gefertigte Kraftstoffbehälter für Kraftfahrzeuge können quellen und sich in Abhängigkeit von dem Füllstand des Kraftstoffs verformen.

Der Erfindung liegt das Problem zugrunde, eine Vorrichtung der eingangs genannten Art so weiterzubilden, daß sie den Füllstand besonders zuverlässig erfaßt und keine aufwendige Abdichtung des Ultraschallsensors oder des Behälters erfordert.

Dieses Problem wird erfindungsgemäß dadurch gelöst, daß zwischen dem Meßrohr und dem Ultraschallsensor ein Teilbereich der Wandung des Behälters angeordnet ist.

Durch diese Gestaltung ist der Ultraschallsensor zuverlässig vor Kontakt mit der im Behälter befindlichen Flüssigkeit geschützt. Deshalb kann der Ultraschallsensor nicht von der in dem Behälter befindlichen Flüssigkeit angegriffen werden. Das Meßrohr benötigt zudem keine Abdichtung in der Wandung des Behälters. Die Wandung wird dank der Erfindung nicht von dem Meßrohr durchdrungen. Die erfindungsgemäße Vorrichtung ermöglicht zudem eine besonders zuverlässige Messung des Füllstandes in dem Behälter. Weiterhin ist die erfindungsgemäße Vorrichtung konstruktiv besonders einfach aufgebaut und läßt sich sehr kostengünstig fertigen. Selbstverständlich kann in dem Meßrohr wie bei der bekannten Vorrichtung ein Schwimmer angeordnet sein.

Zur weiteren Vereinfachung des Aufbaus der erfindungsgemäßen Vorrichtung trägt es bei, wenn der Ultraschallsensor und eine Auswerteeinheit für die Signale des Ultraschallsensors als bauliche Einheit gestaltet sind. Hierdurch vereinfacht sich zudem die Montage der erfindungsgemäßen Vorrichtung an dem Behälter.

Das Meßrohr könnte beispielsweise schräg in dem Behälter angeordnet sein. Der Ultraschallsensor könnte zudem an der Oberseite des Behälters angeordnet sein und durch einen Vergleich der von dem Boden reflektierten Ultraschallwellen und der von dem Flüssigkeitsspiegel reflektierten Ultraschallwellen den Füllstand der Flüssigkeit im Behälter ermitteln. Die erfindungsgemäße Vorrichtung benötigt jedoch nur eine besonders kostengünstige, einfach aufgebaute Auswerteeinheit, wenn der Ultraschallsensor unmittelbar an dem als Boden ausgebildeten Teilbereich der Wandung des Behälters anliegt.

Der Ultraschallsensor ist gemäß einer anderen vorteilhaften Weiterbildung der Erfindung zuverlässig an dem Behälter befestigt und weist eine sichere Schallübertragung auf die Wandung des Behälters auf, wenn der Ultraschallsensor an der Wandung des Behälters festgeklebt ist.

Der Ultraschallsensor und die Auswerteeinheit lassen sich gemäß einer anderen vorteilhaften Weiterbildung der Erfindung einfach vor Verschmutzung und Beschädigung schützen, wenn der Behälter ein Gehäuse zur Aufnahme des Ultraschallsensors und/oder der Auswerteeinheit des Ultraschallsensors hat. Diese Gestaltung führt bei der für den Kraftstoffbehälter eines Kraftfahrzeuges vorgesehenen Vorrichtung zu einer besonders langen Lebensdauer des Ultraschallsensors und der Auswerteeinheit.

Zur weiteren Verbesserung der Schalleinleitung in die Wandung des Behälters trägt es gemäß einer anderen vorteilhaften Weiterbildung der Erfindung bei, wenn das Gehäuse des Ultraschallsensors mit einem Ultraschallwellen gut leitenden Kontaktmittel gefüllt ist.

Das Meßrohr könnte beispielsweise aus Metall gefertigt sein. Das Meßrohr läßt sich jedoch gemäß einer anderen vorteilhaften Weiterbildung der Erfindung mit nahezu beliebigen Querschnitten erzeugen, wenn das Meßrohr aus Kunststoff im Spritzgußverfahren gefertigt ist. Hierdurch kann man das Meßrohr nicht nur rund, sondern beispielsweise auch entsprechend den Abmessungen eines Ultraschallsensors und eines Ultraschallempfängers des Ultraschallsensors oval oder vieleckig gestalten. Die erfindungsgemäße Vorrichtung gestaltet sich hierdurch besonders kostengünstig.

Zur weiteren Verringerung der Fertigungskosten der erfindungsgemäßen Vorrichtung trägt es bei, wenn das Meßrohr einteilig mit dem Behälter gefertigt ist. Dies erfordert insbesondere bei aus Kunststoff im Spritzgußverfahren gefertigten Behältern keine zusätzlichen Fertigungsschritte für das Meßrohr.

Das Meßrohr läßt sich gemäß einer anderen vorteilhaften Weiterbildung der Erfindung in nahezu beliebig gestalteten Behältern einfach anordnen, wenn der Behälter Stütz-elemente zur seitlichen Halterung des Meßrohrs hat.

Das Meßrohr könnte mit einem Ende fest mit dem Behälter verbunden sein. Hierdurch kann jedoch das zweite Ende des Meßrohrs frei schwingen und zu einer Schaumbildung im Bereich des Flüssigkeitsspiegels führen. Diese Schaumbildung führt zu Ungenauigkeiten bei der Messung des Füllstandes. Das Meßrohr ist gemäß einer anderen vorteilhaften Weiterbildung der Erfindung zuverlässig gegen Schwingungen geschützt, wenn das Meßrohr von zwei einander gegenüberstehenden Wandungen des Behälters gehalten ist.

Die Montage des Meßrohrs gestaltet sich gemäß einer anderen vorteilhaften Weiterbildung der Erfindung besonders einfach, wenn das Meßrohr an einem in dem Behälter anzuordnenden Bauteil eine bauliche Einheit bildet.

Das Meßrohr befindet sich mit seinem unteren Ende nahe der tiefsten Stelle in einem als Kraftstoffbehälter ausgebildeten Behälter, wenn das Meßrohr an einem Schwalltopf oder einer Saugstrahlpumpe des als Kraftstoffbehälter ausgebildeten Behälters angeordnet ist. Da der Schwalltopf bei heutigen Kraftfahrzeugen ohnehin gegen den Boden des Kraftstoffbehälters vorgespannt oder mit diesem einteilig gefertigt ist, läßt sich hierdurch der Füllstand im Kraftstoffbehälter besonders zuverlässig erfassen.

Zur weiteren Verringerung der Fertigungskosten und zur gleichzeitigen Vereinfachung der Montage der erfindungsgemäßen Vorrichtung trägt es bei, wenn das Meßrohr einteilig mit dem Schwalltopf oder einem Halter für den Schwalltopf gefertigt ist.

Kraftstoffbehälter heutiger Kraftfahrzeuge sind häufig als Satteltank oder als Mehrkammertank ausgebildet. Bei solchen Behältern gestaltet sich die zuverlässige Ermittlung des Füllstandes der Flüssigkeit besonders einfach, wenn der als Mehrkammertank ausgebildete Behälter entsprechend der Anzahl der Kammern mehrere an der Außenseite des Behälters anliegende Ultraschallsensoren hat.

Bei nahezu vollem Behälter ist es vorteilhaft, wenn die von dem Flüssigkeitsspiegel reflektierten Ultraschallwellen von einem Schwimmer verstärkt werden. Bei nahezu leerem Behälter verfälscht der Schwimmer jedoch den ermittelten Füllstand. Der Füllstand läßt sich gemäß einer anderen vorteilhaften Weiterbildung der Erfindung bei nahezu vollem und bei nahezu leerem Behälter gleichermaßen zuverlässig ermitteln, wenn das Meßrohr einen Anschlag zur Begrenzung eines Bewegungsbereichs eines Ultraschallwellen reflektierenden Schwimmers nach unten hin hat. Weiterhin läßt sich durch die Höhe des Anschlages sehr einfach ein Reservefüllstand festlegen. Sinkt der Füllstand in dem Behälter unter den Anschlag für den Schwimmer, empfängt der Ultraschallsensor unabhängig von der Art und der Temperatur des Kraftstoffs zwei Reflexionen. Durch einen Vergleich der beiden Reflexionen läßt sich der Füllstand des nahezu leeren Kraftstoffbehälters besonders genau ermitteln.

Eine Schaumbildung in dem Meßrohr läßt sich gemäß einer anderen vorteilhaften Weiterbildung der Erfindung zuverlässig vermeiden, wenn zumindest an einem Ende des Meßrohrs angeordnete Ausgleichsöffnungen ein Dämpfungselement zur Dämpfung des Druckausgleichs aufweisen. Weiterhin werden hierdurch Schwankungen der Flüssigkeitssäule in dem Meßrohr zuverlässig gedämpft.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen Behälter mit einer erfindungsgemäßen Vorrichtung im Längsschnitt,
- Fig.2: einen als Satteltank ausgebildeten Behälter mit einer weiteren Ausführungsform der Erfindung im Längsschnitt.

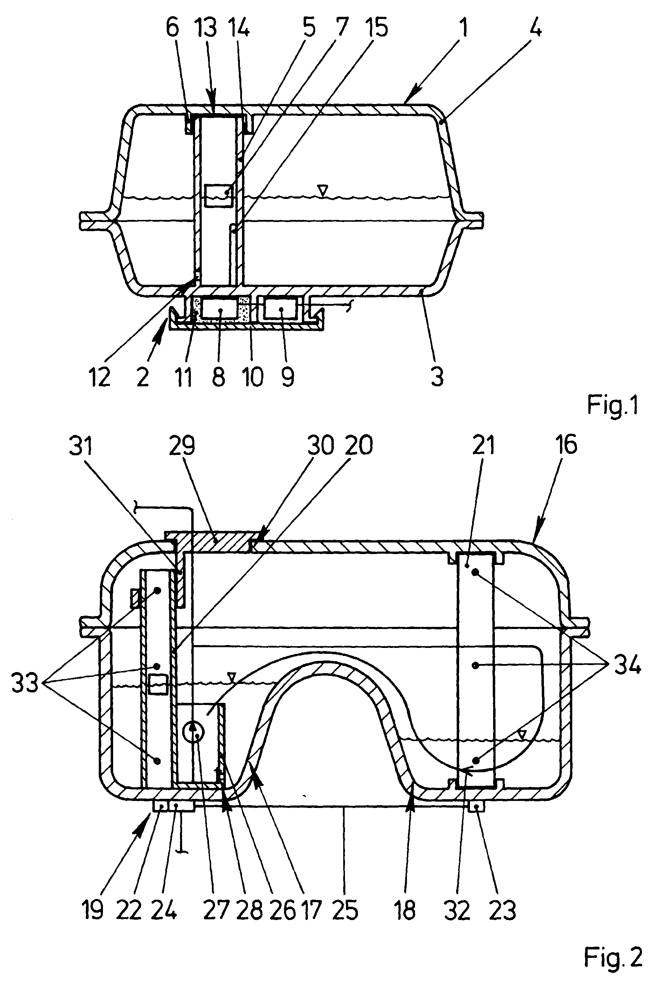

Figur 1 zeigt einen als Kraftstoffbehälter für ein Kraftfahrzeug ausgebildeten Behälter 1 mit einer Vorrichtung 2 zur Messung des Füllstandes an Kraftstoff. Der Behälter 1 hat zwei aus Kunststoff im Spritzgußverfahren gefertigte und miteinander verschweißte Schalenteile 3, 4. Eines der Schalenteile 3 ist einteilig mit einem Meßrohr 5 gefertigt, während das andere Schalenteil 4 Stützelemente 6 zur seitlichen Halterung des freien Endes des Meßrohrs 5 hat. In dem Meßrohr 5 ist ein Schwimmer 7 angeordnet. An der Außenseite des Behälters 1 sind unmittelbar unterhalb des Meßrohrs 5 ein Ultraschallsensor 8 und eine Auswerteeinheit 9 angeordnet. Der Behälter 1 hat zur Aufnahme des Ultraschallsensors 8 und der Auswerteeinheit 9 ein Gehäuse 10. Das Gehäuse 10 ist im Bereich des Ultraschallsensors 8 mit einem Ultraschallwellen gut leitenden Kontaktmittel 11 gefüllt. Das Meßrohr 5 hat nahe des Bodenbereichs des Behälters 1 und an seinem freien Ende jeweils eine Ausgleichsöffnung 12, 13. Über die Ausgleichsöffnungen 12, 13 strömt Luft oder Kraftstoff in das Meßrohr 5 und es erfolgt ein Druckausgleich mit dem übrigen Teil des Behälters 1. Hierdurch entspricht der Füllstand des Kraftstoffs im Meßrohr 5 dem des übrigen Teils des Behälters 1. Um starke Schwankungen des Kraftstoffs in dem Meßrohr 5 zu vermeiden, weist die obere Ausgleichsöffnung 13 ein Dämpfungselement 14 auf. Der Bewegungsbereich des Schwimmers 7 wird von einem in dem Meßrohr 5 angeordneten Anschlag 15 begrenzt.

Der Ultraschallsensor 8 sendet Ultraschallwellen in das Meßrohr 5. Bei einem den Anschlag 15 übersteigenden Füllstand werden die Ultraschallwellen von dem Schwimmer 7 und unterhalb des Anschlags 15 von dem Kraftstoffspiegel reflektiert. Der Schwimmer 7 dient zur Verstärkung der Reflexionen der Ultraschallwellen. Bei niedrigem Füllstand in dem Behälter 1 ist die Verstärkung nicht erforderlich. Die Reflexionen werden von dem Ultraschallsensor empfangen und der Auswerteeinheit 9 zugeführt. Die Auswerteeinheit 9 ermittelt aus der Laufzeit der Ultraschallwellen die Füllhöhe des Kraftstoffs in dem Behälter 1. Über die Füllhöhe läßt sich anschließend das in dem Behälter 1 befindliche Volumen an Kraftstoff ermitteln. Wenn der Füllstand unterhalb des Anschlags 15 sinkt, empfängt der Ultraschallsensor 8 neben der Reflexion von dem Kraftstoffspiegel eine Reflexion von dem am Anschlag 15 anliegenden Schwimmer 7. Diese zweite Reflexion kann zur Markierung eines Reservefüllstandes herangezogen werden.

Figur 2 zeigt einen als Satteltank ausgebildeten Behälter 16 mit zwei Kammern 17, 18 und mit einer Vorrichtung 19 zur Messung des Füllstandes in jeder der Kammern 17, 18. Die Vorrichtung 19 hat jeweils in den Kammern 17, 18 angeordnete Meßrohre 20, 21. Auf der Außenseite des Behälters 16 sind unmittelbar unterhalb der Meßrohre 20, 21 jeweils ein Ultraschallsensor 22, 23 angeordnet. Einer der Ultraschallsensoren 22 bildet mit einer Auswerteeinheit 24 eine bauliche Einheit. Der andere Ultraschallsensor 23 ist mit der Auswerteeinheit 24 über eine Leitung 25 verbunden. Die Ultraschallsensoren 22, 23 und die Auswerteeinheit 24 ermitteln die Füllhöhe in jeder der Kammern 17, 18 wie bei der Vorrichtung 2 aus Figur 1 über die Ermittlung der Laufzeit der ausgesandten und reflektierten Ultraschallwellen. Eines der Meßrohre 20, 21 ist einteilig mit einem Schwalltopf 26 gefertigt. In dem Schwalltopf 26 ist eine Fördereinheit 27 angeordnet. Der Schwalltopf 26 befindet sich an der tiefsten Stelle des Behälters 16 und hat ein Bodenventil 28, durch welches Kraftstoff ausschließlich in den Schwalltopf 26 hineingelangen kann. Der Behälter 16 hat oberhalb des Schwalltopfes 26 eine von einem Deckel 29 verschlossene Öffnung 30. Die Öffnung 30 dient als Montageöffnung für den Schwalltopf 26. An dem Deckel 29 ist ein Halter 31 angeordnet, der das Meßrohr 20 vertikal verschieblich haltert und dieses zusammen mit dem Schwalltopf 26 gegen den Boden des Behälters 16 vorspannt. Das andere Meßrohr 21 ist in dem Behälter 16 eingespannt und haltert eine Saugstrahlpumpe 32. Die Saugstrahlpumpe 32 wird von der Fördereinheit 27 mit Kraftstoff versorgt und fördert den Kraftstoff in den Schwalltopf 26. Die Meßrohre 20, 21 weisen jeweils mehrere Ausgleichsöffnungen 33, 34 für einen Druckausgleich mit dem übrigen Teil des Behälters 16 auf.

## Patentansprüche

1. Vorrichtung zur Messung eines Füllstandes einer Flüssigkeit in einem Behälter, insbesondere in einem Kraftstoffbehälter eines Kraftfahrzeuges, mit einem in dem Behälter angeordneten, Ausgleichsöffnungen aufweisenden Meßrohr und mit einem nahe eines Endes des Meßrohrs angeordneten Ultraschallsensor zur Erzeugung von Ultraschallwellen in dem Meßrohr und zum Empfangen der im Bereich des Flüssigkeitsspiegels im Behälter reflektierten Ultraschallwellen, **dadurch gekennzeichnet**, daß zwischen dem Meßrohr (5, 20, 21) und dem Ultraschallsensor (8, 22, 23) ein Teilbereich der Wandung des Behälters (1, 16) angeordnet ist.

2. Vorrichtung nach Anspruch 1, **dadurch gekennzeichnet**, daß der Ultraschallsensor (22) und eine Auswerteeinheit (24) für die Signale des Ultraschallsensors (22) als bauliche Einheit gestaltet sind.

3. Vorrichtung nach Anspruch 1 oder 2, **dadurch gekennzeichnet**, daß der Ultraschallsensor (8, 22, 23) unmittelbar an dem als Boden ausgebildeten Teilbereich der Wandung des Behälters (1, 16) anliegt.

4. Vorrichtung nach zumindest einem der vorhergehenden Ansprüche, **dadurch gekennzeichnet**, daß der Ultraschallsensor (8, 22, 23) an der Wandung des Behälters (1, 16) festgeklebt ist.

5. Vorrichtung nach zumindest einem der vorhergehenden Ansprüche, **dadurch gekennzeichnet**, daß der Behälter (1) ein Gehäuse (10) zur Aufnahme des Ultraschallsensors (8) und/oder der Auswerteeinheit (9) des Ultraschallsensors (8) hat.

6. Vorrichtung nach zumindest einem der vorhergehenden Ansprüche, **dadurch gekennzeichnet**, daß das Gehäuse (10) des Ultraschallsensors (8) mit einem Ultraschallwellen gut leitenden Kontaktmittel (11) gefüllt ist.

7. Vorrichtung nach zumindest einem der vorhergehenden Ansprüche, **dadurch gekennzeichnet**, daß das Meßrohr (5, 20, 21) aus Kunststoff im Spritzgußverfahren gefertigt ist.

8. Vorrichtung nach zumindest einem der vorhergehenden Ansprüche, **dadurch gekennzeichnet**, daß das Meßrohr (5) einteilig mit dem Behälter (1) gefertigt ist.

9. Vorrichtung nach zumindest einem der vorhergehenden Ansprüche, **dadurch gekennzeichnet**, daß der Behälter (1) Stützelemente (6) zur seitlichen Halterung des Meßrohrs (5) hat.

10. Vorrichtung nach zumindest einem der vorhergehenden Ansprüche, **dadurch gekennzeichnet**, daß das Meßrohr (5, 20, 21) von zwei einander gegenüberstehenden Wandungen des Behälters (1, 16) gehalten ist.

11. Vorrichtung nach zumindest einem der vorhergehenden Ansprüche, **dadurch gekennzeichnet**, daß das Meßrohr (20) an einem in dem Behälter (16) anzuordnenden Bauteil (Schwalltopf 26, Saugstrahlpumpe 32) eine bauliche Einheit bildet.

12. Vorrichtung nach zumindest einem der vorhergehenden Ansprüche, **dadurch gekennzeichnet**, daß das Meßrohr (20) an einem Schwalltopf (26) oder einer Saugstrahlpumpe (32) des als Kraftstoffbehälter ausgebildeten Behälters (16) angeordnet ist.

13. Vorrichtung nach zumindest einem der vorhergehenden Ansprüche, **dadurch gekennzeichnet**, daß das Meßrohr (20) einteilig mit dem Schwalltopf (26) oder einem Halter (31) für den Schwalltopf (26) gefertigt ist.

14. Vorrichtung nach zumindest einem der vorhergehenden Ansprüche, **dadurch gekennzeichnet**, daß der als Mehrkammertank ausgebildete Behälter (16) entsprechend der Anzahl der Kammern (17, 18) mehrere an der Außenseite des Behälters (16) anliegende Ultraschallsensoren (22, 23) hat.

15. Vorrichtung nach zumindest einem der vorhergehenden Ansprüche, **dadurch gekennzeichnet**, daß das Meßrohr (5) einen Anschlag (15) zur Begrenzung eines Bewegungsbereichs eines Ultraschallwellen reflektierenden Schwimmers (7) nach unten hin hat.

16. Vorrichtung nach zumindest einem der vorhergehenden Ansprüche, **dadurch gekennzeichnet**, daß zumindest an einem Ende des Meßrohrs (5) angeordnete Ausgleichsöffnungen (12, 13) ein Dämpfungselement (14) zur Dämpfung des Druckausgleichs aufweisen.
